# EUROPÄISCHE PATENTANMELDUNG

(11) **EP 1 279 475 A1**
(43) Veröffentlichungstag der Anmeldung: **29.01.2003**
(21) Anmeldenummer: 02014502.5
(22) Anmeldetag: 29.06.2002
(51) Int. Cl.: B29C 45/16

(54) **Transluzentes Kunststoffformteil sowie Verfahren zu dessen Herstellung**

(30) Priorität: 24.07.2001 DE 10135928; 14.09.2001 DE 10145301
(71) Anmelder: Bayerische Motoren Werke Aktiengesellschaft, 80809 München (DE)
(72) Erfinder: Zimmermann, Manfred, 85435 Erding (DE); Mühlsteffen, Frank, 85293 Reichertshausen (DE); Arlt, Ulrich, 91560 Heilbronn (DE)

(57) **Zusammenfassung**

Ein transluzentes Kunststoffformteil weist einen Kern mit sehr großer und/oder stark variierender Wandstärke auf, welcher von einer Schale mit im Wesentlichen konstanter Wandstärke aus dem selben Werkstoff umgeben ist, wodurch eine einfallstellen- und rissfreie Oberfläche des Formteiles sowie bei Einfärbung des Schalenwerkstoffes eine gleichmäßige Farbgebung gewährleistet ist.

## Beschreibung

Die Erfindung bezieht sich auf ein transluzentes Kunststoffformteil mit sehr großer und/oder stark variierender Wanddicke.

Bekannt ist es, Kunststoffteile aus durchscheinendem Kunststoff herzustellen. Beispielhaft wird die DE 44 08 230 A1 genannt, die eine transparente Abdeckscheibe aus Kunststoff für KFZ-Scheinwerfer und andere KFZ-Lichtgeber sowie ein Verfahren zu ihrer Herstellung beschreibt. Weiterhin ist es bekannt, beispielsweise um das Fahrzeuggewicht zu vermindern oder die Crash-Sicherheit zu erhöhen, auch Fahrzeugscheiben aus Kunststoff herzustellen. In diesem Zusammenhang wird auf die EP 371 773 A2 verwiesen, in welcher eine aus Kunststoff bestehende Fahrzeugscheibe beschrieben ist. Die bekannten, aus durchscheinendem Kunststoff bestehenden Formteile sind flächig ausgebildet und weisen eine nur geringe Dicke auf.

Bei komplexeren Formteilen aus durchscheinendem Kunststoff, insbesondere bei Formteilen, die Bereiche großer Materialanhäufung aufweisen, d.h. bei denen eingeschlossene Formkreise einen sehr großen Durchmesser aufweisen, besteht das Problem, dass aufgrund der großen bzw. stark variierenden Wandstärke auf der Außenfläche Einfallstellen und/oder Risse entstehen. Abhilfe wurde hier durch Konstruktionen mit Stützrippen geschaffen, wobei auch die Stützrippen nicht in beliebiger Stärke ausgebildet sein können, da auch sie ab einer gewissen Wandstärke nicht mehr problemlos herstellbar sind und Einfallstellen auf der Außenhaut entstehen. Ursächlich ist der beim Abkühlen auftretende Materialschwund sowie innere temperaturdifferenzbedingte Spannungen.

Vor allem Anforderungen an die gestalterische Freiheit in Bezug auf das Fahrzeugdesign begründen den Wunsch, durchscheinende Kunststoffteile in beliebiger geometrischer Form ― auch mit sehr großen und/oder stark unterschiedlichen Wandstärken und daraus folgend Bereichen großer Materialanhäufung ― herstellen zu können. Insbesondere ist es dabei gewünscht, dass die Formteile wie aus einem Guss erscheinen, also keine sichtbaren Hohlräume oder Stützkonstruktionen (Rippen) aufweisen.

Die Bereitstellung derartiger Kunststoffformteile unter Vermeidung der Eingangs genannten Nachteile sowie eines Verfahrens zu deren Herstellung ist Aufgabe der vorliegenden Erfindung.

Erfindungsgemäß wird die Aufgabe mit den Merkmalen des Anspruchs 1 gelöst, wobei der zugrunde liegende Gedanke die Idee beinhaltet, einen nahezu beliebig ausgestalteten Kern aus durchscheinendem Kunststoff ― welcher nicht notwendigerweise eine makellose Oberfläche aufweisen muss ― mit einer Schale aus ebenfalls durchsichtigem Kunststoff zu umspritzen; die Dicke der Schale wird so gewählt, dass eine einfallstellen- und rissfreie Oberflächenbeschaffenheit des fertigen Formteiles gewährleistet ist, was insbesondere dadurch erreicht wird, dass sie eine über den gesamten Bereich im Wesentlichen konstante, relativ geringe Stärke aufweist. Der Schwund sowie die Spannungen werden so in Grenzen gehalten, bzw. sind gleichmäßig über das Bauteil verteilt. Gegebenenfalls überdeckt die Schale nicht den gesamten Kern, so dass unter Umständen auch Teilbereiche des Kerns freiliegend bleiben. Ebenfalls zweckmäßig ist es, wenn gegebenenfalls insbesondere in Bereichen dünner Wandstärken diese Bereiche nur aus Schalenkunststoff hergestellt werden, also keinen Kern aufweisen.

Ein besonders bevorzugtes Ausführungsbeispiel sowie ein Verfahren zur Herstellung eines transluzenten Kunststoffformteiles sind mit den Unteransprüchen angegeben.

Gemäß einem besonders bevorzugten Ausführungsbeispiel bestehen der Kern und die Schale des Kunststoffformteiles aus Kunststoffen mit im Wesentlichen ähnlichen Werkstoffeigenschaften. Ziel ist hier insbesondere, eine saubere Verbindung zwischen Kern und Schale zu erreichen, wodurch deutlich wird, dass die Kunststoffe aufgrund ihrer Werkstoffeigenschaften dazu geeignet sind, sich beim Spritzgießvorgang so zu verbinden, dass der Verbindungsbereich später nicht mehr zu erkennen ist. Die verwendeten Kunststoffe weisen zumindest annähernd ähnliche Schmelzbereiche und Wärmeausdehnungskoeffizienten auf und sind chemisch kompatibel, so dass sie sich problemlos verbinden. Idealerweise bestehen Kern und Schale aus dem selben Kunststoff. Bei dem verwendeten Kunststoff handelt es sich bevorzugterweise um einen Polycarbonat- oder Polymethacrylat-Kunststoff.

In einem besonders bevorzugten Ausführungsbeispiel ist der Kern aus weiß durchsichtigem Kunststoff hergestellt, für das Schalenmaterial wird dieser weiß durchsichtige Kunststoff durchscheinend eingefärbt, so dass er farbig durchsichtig erscheint. Besonders vorteilhaft bei einer derartigen Ausgestaltung ist das in Bezug auf die Farbgebung homogene Erscheinungsbild des Kunststoffformteiles. Im Gegensatz zu vollständig eingefärbten, nicht nach der Schalentechnik hergestellten Kunststoffteilen, welche in Bereichen großer Wandstärken dunkler und in Bereichen kleiner Wandstärken heller erscheinen, weist das vorliegende Kunststoffformteil aufgrund der zumindest annähernd konstanten Dicke der Schale eine entsprechend gleichmäßige Farbgebung auf. Ein weiteres Ausführungsbeispiel umfasst die Herstellung sowohl des Kerns als auch der Schale aus weiß durchsichtigem Kunststoff.

Ein besonderer Effekt kann dadurch erreicht werden, dass die Schale den Kern nicht vollständig umschließt, so dass das Kunststoffformteil auch Bereiche umfasst, welche nicht eingefärbt sind, also weiß durchsichtig erscheinen. Weiterhin kann es zweckmäßig sein, derartige, nicht von der Schale bedeckte Kernbereiche vorzusehen, um die Fixierung des Kunststoffformteiles im Spritzgießwerkzeug während des zweiten Spritzgießzyklusses, in welchem die Schale angespritzt wird, zu verbessern. In diesen Bereichen können während des zweiten Spritzgießzyklusses die Formhälften größerflächig aufliegen, wodurch einerseits eine besonders gute Fixierung des Kernes erreicht wird und andererseits diese Fläche nicht mit Schalenkunststoff angespritzt wird.

Das vorliegende Kunststoffformteil weist zweckmäßigerweise eingespritzte Einlagteile auf. Diese Einlageteile sind entweder alleine in der Schale und/oder im Kern und in der Schale eingegossen. Im vorliegenden Ausführungsbeispiel sind Buchsen für den Durchgang einer Befestigungsschraube und/oder Gewindebuchsen und/oder mit einem Bund versehene Buchsen zur Aufnahme eines Stiftes eingegossen, wobei insbesondere die Gewindebuchsen mit einer Außenrändelung versehen sind, welche ein Durchdrehen im Kunststoffformteil verhindert.

Im Ausführungsbeispiel der Erfindung werden insbesondere die sichtbaren Bereiche des Kunststoffformteiles als Kern mit umgebender Schale ausgebildet, wobei dünnwandigere Teilbereiche durchaus auch ausschließlich aus Schalenkunststoff gebildet sein können. Bei nicht sichtbaren Teilbereichen, welche primär funktionale Aufgaben erfüllen, wird zweckmäßigerweise auf eine Umhüllung mit Schalenkunststoff verzichtet, der Kern ist an dieser Stelle entsprechend herkömmlichen Konstruktionsmethoden beispielsweise unter Verwendung von Versteifungsrippen so ausgebildet, dass keine Materialanhäufungen auftreten.

Zur Herstellung eines erfindungsgemäßen transluzenten Kunststoffformteiles wird in einem ersten Spritzgießzyklus der Kern durch Einspritzen des Kernkunststoffes in eine zwischen den Formhälften eines Kernwerkzeuges gebildete Kavität hergestellt. Der Kern ist in einem Ausführungsbeispiel voll, also ohne Hohlräume ausgebildet, in einem anderen Ausführungsbeispiel weist er Hohlräume auf. Das Kernwerkzeug ist speziell zur Verarbeitung von durchscheinenden Kunststoffen so ausgestaltet, dass die Anordnung der Injektoren und gegebenenfalls Strömungsleiteinrichtungen ein blasen- und schlierenfreies Einspritzen des Kunststoffes gewährleistet. Vor dem Einspritzen des Kunststoffes werden benötigte Einlegeteile im Spritzgießwerkzeug eingelegt und fixiert. Nachfolgend wird der auf diese Weise erzeugte Kern aus dem Kernwerkzeug entnommen und gegebenenfalls zusammen mit weiteren Einlegeteilen in das Schalenwerkzeug eingelegt.

In einem zweiten Spritzgießzyklus wird die Schale durch Einspritzen des Schalenkunststoffes in die zwischen den Formhälften des Schalenwerkzeuges gebildete Kavität hergestellt, wodurch auch die letztendliche Formgebung erfolgt. Während des zweiten Spritzgießzyklus werden insbesondere größere Formteile zusätzlich mit Niederhaltern in Position gehalten, um ein Aufschwimmen und einen Verzug aufgrund der mit dem Schalenwerkstoff eingebrachten Wärme zu verhindern; hierfür sind Vorsprünge vorgesehen, an denen der Niederhalter eingreift.

Mit dem erfindungsgemäßen Verfahren können beispielsweise Außenverkleidungsteile für ein Kraftfahrzeug hergestellt werden, welche nicht nur gehobenen Anforderungen an das Design genügen, sondern welche auch entsprechend ihrer Belastung dimensioniert sind und in den erforderlichen Bereichen sehr große Querschnitte ohne Einfallstellen bzw. Verzug aufweisen.

Nachfolgend sind Ausführungsbeispiele erfindungsgemäßer, nach dem erfindungsgemäßen Verfahren hergestellter transluzenter Kunststoffformteile unter Bezugnahme auf Figuren beschrieben, dabei zeigen schematisch und beispielhaft
- Figur 1: einen Kern eines Windschildhalters,
- Figur 2: einen mit einer Schale umspritzten Kern eines Windschildhalters,
- Figur 3a: einen Windschildhalter, Schnitt durch die Anschraubpunkte des Windschildes,
- Figur 3b: einen Windschildhalter, Schnitt durch die Bauteilteilmitte,
- Figur 3c: einen Windschildhalter, Schnitt durch einen Fußbereich mit eingespritzter Buchse,
- Figur 4a: eine Tankreling,
- Figur 4b: eine Tankreling, Schnitt durch den vorderen Anschraubbereich,
- Figur 5: eine Gepäckbrücke,
- Figur 6a: eine Gepäckbrücke, Querschnitt und
- Figur 6b: eine Gepäckbrücke, Längsschnitt.

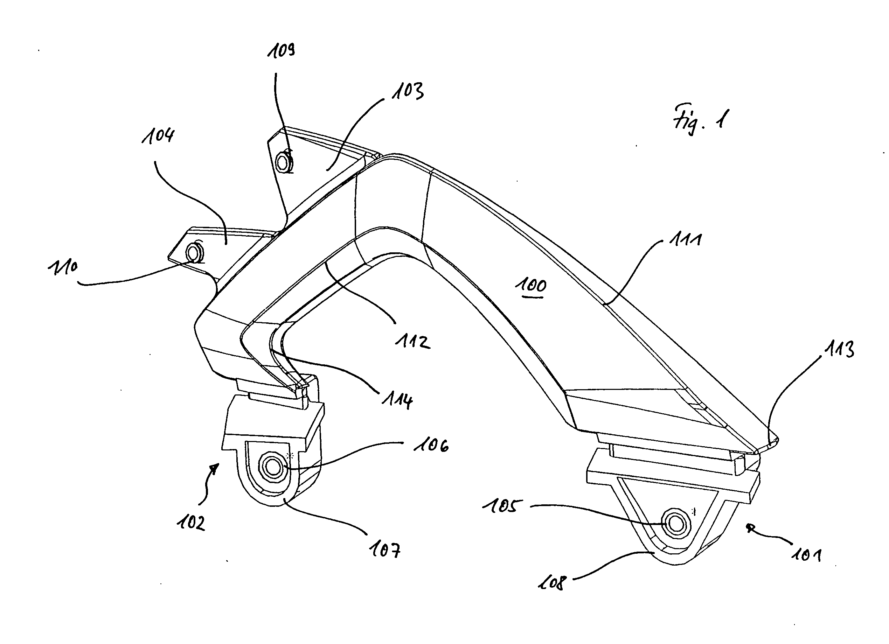

Fig. 1 zeigt einen Kern eines Windschildhalters 100 zur Befestigung eines in dieser Ansicht nicht dargestellten Windschildes an einem Motorrad. Der Windschildhalter 100 weist zwei Fußbereiche 101, 102 zur Befestigung am Motorrad sowie zwei Befestigungsbereiche 103, 104 zur Befestigung des Windschildes auf. Die Ausgestaltung der Fußbereiche 101, 102 erfolgt gemäß herkömmlichen Konstruktionsmethoden mittels Versteifungsrippen 107, 108, wobei Metallbuchsen 105, 106 zum Durchgang von Befestigungsschrauben in den Kunststoff eingespritzt sind. In den Befestigungsbereichen für das Windschild 103, 104 sind Gewindebuchsen 109, 110 zur Aufnahme von Befestigungsschrauben für das Windschild eingespritzt. Um eine Verdrehsicherung beim Einschrauben der Befestigungsschrauben zu gewährleisten, sind die Gewindebuchsen 109, 110 mit einer Außenrändelung versehen. Das dargestellte Bauteil ist entsprechend den auftretenden Belastungskräften voll und sehr massiv ausgebildet, die Bauteilkanten 111, 112, 113, 114 weisen kleine Radien auf.

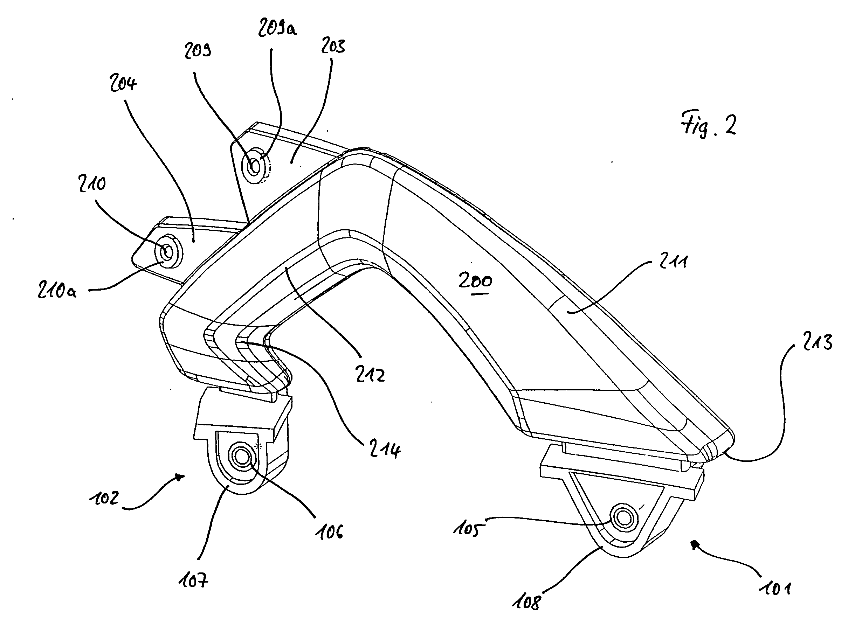

Fig. 2 zeigt einen mit einer Schale umspritzten Kern eines Windschildhalters, wobei nicht der gesamte Kern mit Schalenmaterial umspritzt ist. Im vorliegenden Ausführungsbeispiel sind die Fußbereiche 101, 102 von einer Umspritzung mit Schalenmaterial ausgenommen, da dieser Bereich in montiertem Zustand nicht sichtbar ist. Der sichtbare Teil des Windschildhalters ist mit Schalenwerkstoff derart umspritzt, dass so die endgültige Bauteilform ausgebildet wird, wobei die Bauteilkanten 211, 212, 213, 214 jetzt im Vergleich zum Kern 100 größere Radien aufweisen. Mittels der Umspritzung des Kernes im Bereich der Anschraubpunkte des Windschildes werden nicht nur die Gewindebuchsen 209, 210 vollständig in Kunststoff eingegossen, sondern auch Auflageflächen 209a, 210a zur Auflage des Windschildes gebildet.

Fig. 3a zeigt einen Schnitt durch die Anschraubbereiche des Windschildhalters für das Windschild. In einem ersten Spritzgießzyklus wird der Kern 353 hergestellt, wobei die Gewindebuchsen 309, 310 derart eingegossen werden, dass sie auf der Unterseite bündig mit dem Kern abschließen und diesen auf der Oberseite überragen. In einem zweiten Spritzgießzyklus wird der Kern 353 mit Schalenmaterial umspritzt, wodurch die Schale 352 gebildet wird und die Gewindebuchsen 309, 310 vollständig in Kunststoff eingespritzt werden und zugleich Auflagebereiche 309a, 310a für das Windschild gebildet werden. Deutlich erkennbar im dargestellten Schnitt ist, dass der Kern 353 aufgrund der in diesem Bereich relativ geringen Bauteilstärke nicht vollständig von der Schale 352 umschlossen ist.

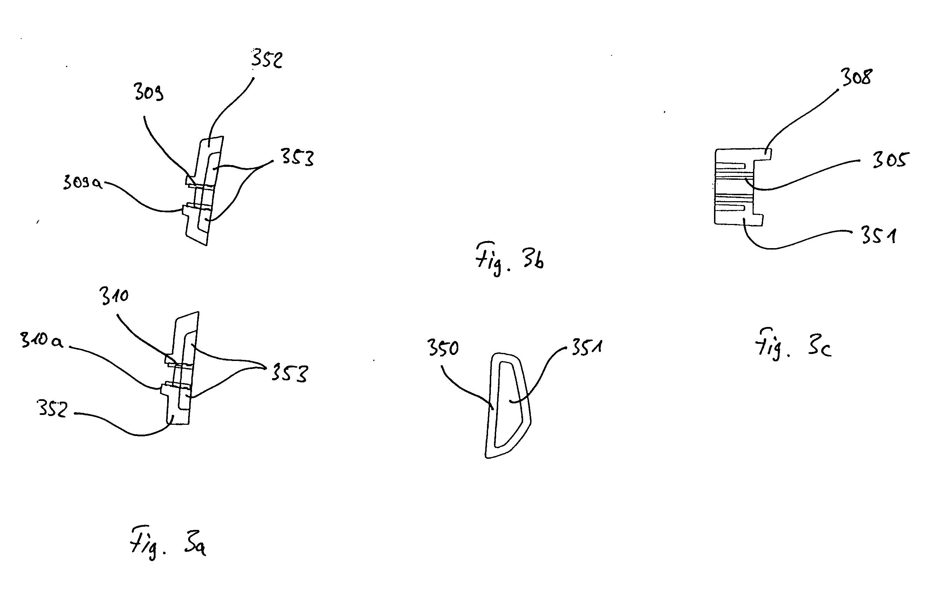

In Bereichen größerer Wandstärke ist, wie im Schnitt mit Fig. 3b gezeigt, der Kern 351 vollständig von der Schale 350 umschlossen. Die Bauteilform wird dabei im wesentlichen durch die Ausformung des Kerns 351 bestimmt, die umhüllende Schale 350 weist eine relativ geringe, konstante Stärke auf, wodurch trotz der großen Dicke des Gesamtbauteiles eine sehr hohe Oberflächengüte gewährleistet ist.

Mit Fig. 3c ist ein Schnitt durch den Fußbereich 101 des Formteils 200 gezeigt. Dieser Bereich besteht ausschließlich aus Kernmaterial 351 und ist nicht von der Schale umschlossen. Zur Herstellung wird im zweiten Spritzgießzyklus, in welchem das Anspritzen der Schale erfolgt, dieser Bereich derart im Spritzgießwerkzeug gehalten, dass kein Schalenmaterial an diesen Bereich fließen kann. Der Fußbereich 101 dient zum Anschrauben des Windschildhalters 200 und ist im fertig montierten Zustand verdeckt, so dass in diesem Bereich auf herkömmliche Konstruktionsmethoden zurückgegriffen werden kann. In diesem Sinne sind ― um Materialanhäufungen zu vermeiden ― geringe Wandstärken unter Ausbildung von Stützrippen 308 vorgesehen. Eine eingegossene Buchse 305 dient zur Aufnahme einer Befestigungsschraube und der mit ihr aufgebrachten Befestigungskräfte.

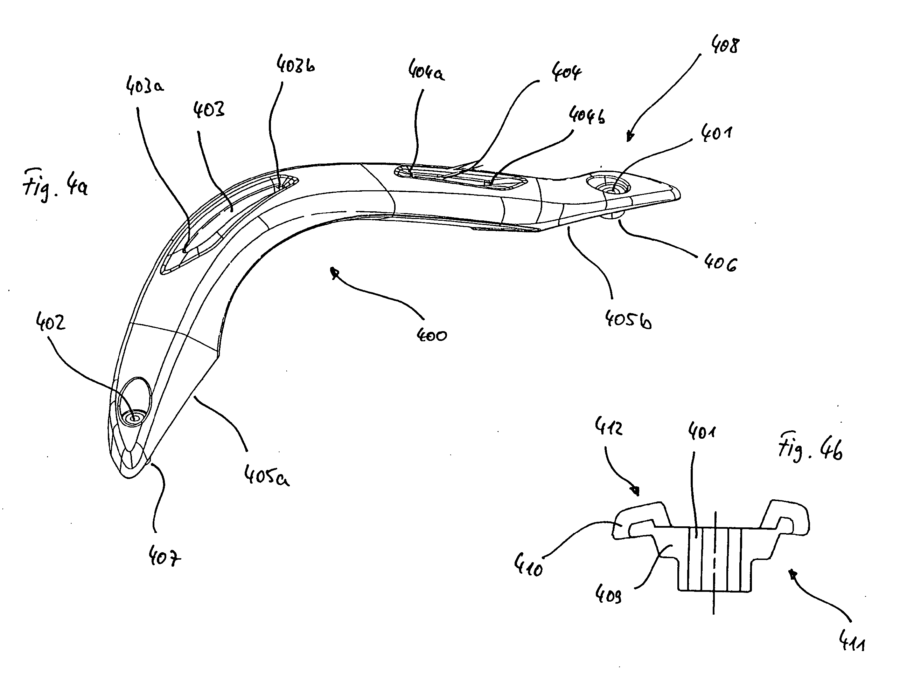

Fig. 4a zeigt eine perspektivische Ansicht eines als Staufachreling verwendeten Kunststoff-Formteiles 400, welches in der dargestellten und in einer gespiegelten Ausführung ein auf dem Tank eines Motorrades angeordnetes Staufach seitlich begrenzt. Zur exakten Positionierung des Bauteiles 400 sind stiftartige Vorsprünge 406, 407 am Bauteil 400 vorgesehen, welche in entsprechende Ausnehmungen eingreifen. Weiterhin sind zur Aufnahme von Befestigungsschrauben Metallbuchsen 401, 402 eingegossen, welche zum Durchgang für Befestigungsschrauben und zur Aufnahme der mit diesen erzeugten Befestigungskräften dienen. Das Bauteil 400 weist Durchbrüche 403, 404 auf, in deren Eckbereichen 403a, 403b, 404a, 404b nasenartige Vorsprünge des Kernes durch die umhüllende Schale hindurchreichen. Diese nasenartigen Vorsprünge dienen zum Angriff von Niederhaltern während des zweiten Spritzgießzyklusses, in welchem das Schalenmaterial aufgebracht wird. Da beim einspritzen des Schalenmaterials ein Wärmeeintrag erfolgt, wodurch den Kern an seiner Oberfläche angeschmolzen wird und sich so Kern und Schale verbinden, wird der Kern auch weich und könnte sich ohne eine geeignete Fixierung, wie beispielsweise mittels Niederhaltern, verformen bzw. Aufschwimmen.

Einen Schnitt durch den Befestigungsbereich 408 der Staufachreling zeigt Fig. 4b. Maßgeblich wird die Bauteilform durch die Form des Kernes 409 bestimmt, die Schale 410 umhüllt in diesem Bereich aufgrund der insgesamt relativ geringen Bauteilstärke nicht das gesamte Bauteil, sondern im wesentlichen nur die sichtbaren Bereiche 412, wohingegen die Auflagebereiche 411 frei bleiben.

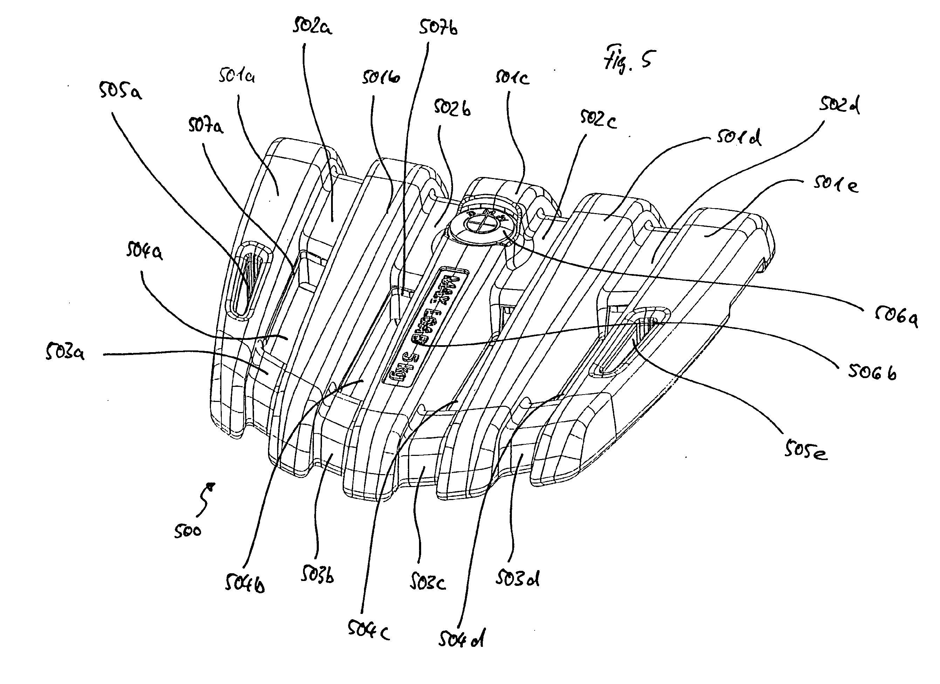

Mit Figur 5 ist eine Gepäckbrücke 500 für ein Motorrad gezeigt. Die Gepäckbrücke 500 wird mittels Streben 501a, 501b, 501c, 501d, 501e gebildet, welche durch Brücken 502a, 502b, 502c, 502d, 503a, 503b, 503c, 503d verbunden sind, so dass Durchbrüche 504a, 504b, 504c, 504d gebildet werden; zudem weisen die Streben 501a, 501e selbst Durchbrüche 505a, 505e auf. Das vorliegende Bauteil 500 ist nach der Kern/Schalen-Bauweise hergestellt, wobei der Kern im Wesentlichen vollständig von Schalenmaterial umschlossen ist. In Teilbereichen wie 507a, 507b ragt der Kern jedoch durch die Schale hindurch nach Außen, wodurch ein besonderer optischer Effekt erzielt wird. Sehr zweckmäßig ist es, wenn im zweiten Spritzgießzyklus, in welchem die Schale angespritzt wird, diese zugleich an ihrer Oberfläche mit einer reliefartigen Beschriftung 506b versehen wird oder ein eine Beschriftung aufweisendes Emblem 506a aufgeklebt wird; beispielsweise werden Warnhinweise und/oder Herstellerangaben/Firmenembleme dargestellt.

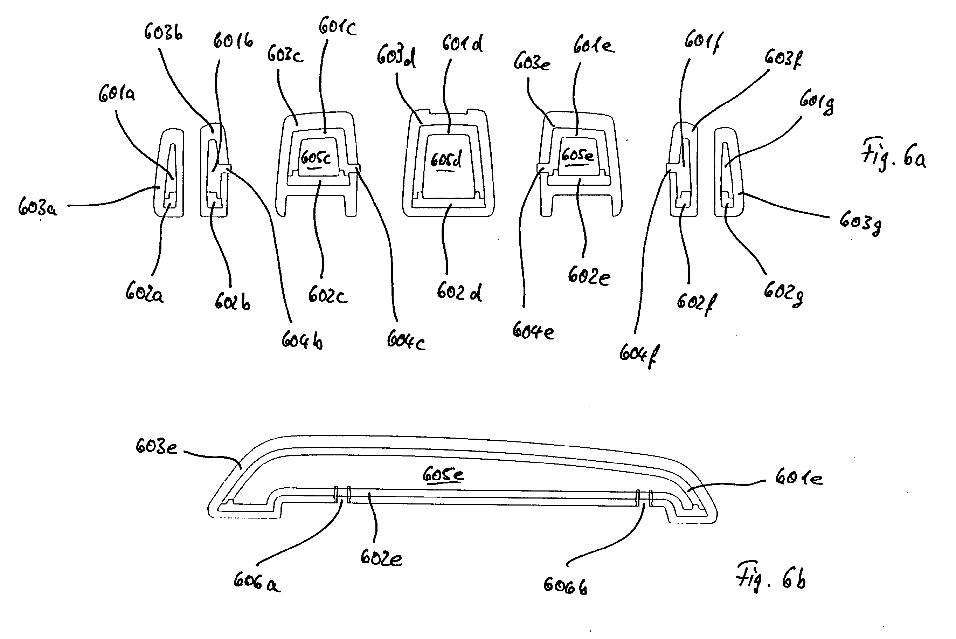

Einen Schnitt quer durch die Streben 501a, 501b, 501c, 501d, 501e zeigt Figur 6a. Die beiden äußeren, Durchbrüche 505a, 505e aufweisende Streben 501a, 501e weisen einen vollen, zweiteilig ausgebildeten Kern auf, wobei ein Kernoberteil 601a, 601b, 601f, 601g mit einem Kernunterteil 602a, 602b, 602f, 602g verbunden und von der Schale 603a, 603b, 603f, 603g umgeben ist. Die Kernoberteile 601c, 601d, 601e und die Kernunterteile 602c, 602d, 602e der Streben 501b, 501c, 501d bilden Kernhohlräume 605c, 605d, 605e, wodurch das Bauteil besonders leicht ist, auch IM Bereich dieser Streben ist der Kern im Bereich 603c, 603d, 603e mit Schalenmaterial überzogen; gegebenenfalls sind mit dem Schalenmaterial zudem Stützrippen ausgebildet. Im Fügebereich von Kernoberteil 601a, 601b, 601c, 601d, 601e, 601f, 601g und Kernunterteil 602a, 602b, 602c, 602d, 602e, 602f, 602g ist eine stufige Trenneben vorgesehen, so dass eine verbesserte Fixierung der Kernteile relativ zueinander erreicht wird. Ein besonderes optisches Erscheinen wird dadurch erreicht, dass in den Bereichen 604b, 604c, 604e, 604f der Kern durch die Schale hindurch nach außen reicht, wobei der Kern weißdurchsichtig und die Schale farbigdurchsichtig sind.

Mit Figur 6b ist ein Schnitt längs durch eine Strebe 501d gezeigt. Kernoberteil 601e und Kernunterteil 602e schließen einen Hohlraum 605e ein und sind von einer Schale 603e umschlossen. Zur Befestigung der Gepäckbrücke sind Befestigungsbereiche wie Gewindebuchsen 606a, 606b vorgesehen.

Der Kernkunststoff ist vorliegend ein weißdurchsichtiger Polycarbonat-Kunststoff, ebenso, wie der Schalenkunststoff, welcher jedoch weiterhin eingefärbt ist. Die Schale verbindet sich aufgrund der guten Kompatibilität der Kunststoffe einwandfrei mit dem Kern, so dass der Übergang zwischen Kern und Schale nicht sichtbar ist. Eine besonders gute Steuerung der Farbgebung lässt sich mittels der einfärbung lediglich der Schale erreichen, wobei eine konstante Schalendicke über das Bauteil eine bezüglich der Farbgebung gleichmäßiges Erscheinen gewährleistet. Um eine besonders hochwertiges Erscheinen der Bauteile zu erreichen, sind diese mit einem Schicht mattem Klarlack überzogen, gegebenenfalls ist die Außenfläche mit einer Struktur wie Noppen versehen.

## Patentansprüche

1. Transluzentes Kunststoffformteil mit sehr großer und/oder stark variierender Wandstärke mit einem Kern und einer wenigstens eine Schicht aufweisenden Schale, wobei sowohl der Kern als auch die Schale aus transluzentem Kunststoff bestehen und die Schale über ihren gesamten Bereich eine im Wesentlichen konstante Stärke aufweist.

2. Transluzentes Kunststoffformteil nach Anspruch 1, **dadurch gekennzeichnet, dass** Kern und Schale aus Kunststoffen mit im Wesentlichen ähnlichen Werkstoffeigenschaften bestehen.

3. Transluzentes Kunststoffformteil nach Anspruch 2, **dadurch gekennzeichnet, dass** Kern und Schale aus dem selben Kunststoff bestehen.

4. Transluzentes Kunststoffformteil nach einem der vorhergehenden Ansprüche, **dadurch gekennzeichnet, dass** der Kern aus weißdurchsichtigem und die Schale aus farbigdurchsichtigem Kunststoff besteht.

5. Transluzentes Kunststoffformteil nach einem der vorhergehenden Ansprüche, **dadurch gekennzeichnet, dass** Einlageteile in der Schale und/oder im Kern und der Schale eingegossen sind.

6. Verfahren zur Herstellung eines transluzenten Kunststoffformteils gemäß wenigstens einem der vorhergehenden Ansprüche, **dadurch gekennzeichnet, dass**
- in einem ersten Spritzgießzyklus der Kern durch Einspritzen des Kernkunststoffes in eine zwischen den Formhälften eines Kernwerkzeuges gebildete Kavität hergestellt wird,
- der Kern in ein Schalenwerkzeug eingelegt wird,
- in einem zweiten Spritzgießzyklus die Schale durch Einspritzen des Schalenkunststoffes in die zwischen den Formhälften des Schalenwerkzeuges und dem Kern gebildete Kavität hergestellt wird.

7. Verfahren nach Anspruch 6, **dadurch gekennzeichnet, dass** im ersten Spritzgießzyklus Einlageteile eingegossen werden, die derart weit über die Oberfläche des Kerns herausragen, dass sie nach dem zweiten Spritzgießzyklus zumindest annähernd bündig mit der Oberfläche der Schale abschließen oder diese überragen.

8. Verfahren nach Anspruch 6, **dadurch gekennzeichnet, dass** im zweiten Spritzgießzyklus Einlageteile derart eingegossen werden, dass sie zumindest annähernd bündig mit der Oberfläche der Schale abschließen oder diese überragen.
